# EUROPEAN PATENT APPLICATION

(11) **EP 3 890 080 A1**
(43) Date of publication of application: **06.10.2021**
(21) Application number: 19889408.1
(22) Date of filing: 28.11.2019
(51) Int. Cl.: H01M 8/0282, H01M 8/0286, C03C 3/064, C03C 3/091, C03C 3/087, H01M 8/124

(54) **SEALANT GLASS COMPOSITION AND SOLID OXIDE FUEL CELL USING SAME**

(30) Priority: 29.11.2018 KR 20180151382
(71) Applicant: LG Electronics Inc., Seoul 07336 (KR)
(72) Inventor: KIM, Namjin, Seoul 08592 (KR); KIM, Young Seok, Seoul 08592 (KR); IM, Sanghyeok, Daejeon 34122 (KR)
(74) Representative: Vossius & Partner Patentanwälte Rechtsanwälte mbB
(86) International application number: PCT/KR2019/016629
(87) International publication number: WO 2020/111837

(57) **Abstract**

The present invention relates to a glass composition capable of being used as a sealant, and a solid oxide fuel cell using same. The sealant glass composition according to the present invention comprises 10-45 wt% of SiO₂, 0.1-20 wt% of B₂O₃, 40-65 wt% of BaO, 0.1-20 wt% of CaO, and 0.1-15 wt% of at least one of Al₂O₃ and ZrO₂, and unlike existing sealant glass compositions, can be suitably used in solid oxide fuel cells operating at intermediate temperatures, and exhibits an advantageous effect in keeping a decrease in sealing adhesion strength to a minimum, even after prolonged use.

## Description

### BACKGROUND

### [Technical Field]

The present disclosure relates to a glass composition that may be used as a sealant and a solid oxide fuel cell using the same.

### [Background Art]

A solid oxide fuel cell (SOFC) is a chemical cell configured to generate electricity by receiving oxidizing gas such as air and reducing fuel gas such as H₂, CO, and CH₄ at high temperatures, respectively. SOFC has advantages such as high thermal efficiency owing to a high operating temperature and low dependence on expensive catalysts.

However, there is a problem in that, as SOFC components are exposed to high temperatures, the cell components have degraded durability. Therefore, prior to practical use thereof, research is required on materials having medium-low-operating temperatures or cell components.

The SOFC includes a unit cell consisting of a cathode, a solid electrolyte, and an anode. Examples of SOFC include a planar design SOFC, a tubular design SOFC, and a plat tube design SOFC according to types of interconnectors to connect the unit cells. For the planar design SOFC, development of a sealant is needed to prevent mixing between fuels and bond between the components of the unit cell.

Recently, many studies are underway for the practical use of medium-low-temperature SOFCs. The medium-low-temperature SOFCs operating at 600°C to 800°C have many advantages over other high-temperature SOFCs operating at 800°C to 1000°C. A ceramic interconnector is used for the high-temperature SOFC due to a metal oxidation problem. However, if the operating temperature thereof is reduced to a temperature equal to or less than 700 °C, metal interconnectors may be used, thereby reducing manufacturing cost thereof. The manufacturing cost thereof may be significantly reduced by providing more options in selecting the design and material of balance of plant (BOP), which accounts for about 50% of the cost of a SOFC system. In addition, the medium-low-temperature SOFC may be operated at low temperatures, thereby facilitating thermal treatment such as startup and shutdown and improving durability thereof.

The planar design SOFC is superior to the tubular design SOFC in efficiency and power density owing to a shorter circuit path. However, the planar design SOFC has a problem of brittle fracture as most of the materials thereof are each a ceramic composite and technical problems occurring in a complicated preparation process. In particular, development of a sealing glass material as a sealant for bonding constituent layers is needed. When fuel gas is mixed with air at a high temperature, oxidation of fuel gas with air occurs, which causes heat generation or explosion, thereby damaging the SOFC stack structure and stopping the operation thereof. In addition, if partial pressure of each gas is reduced at a fuel electrode and an air electrode by mixing the two gases, an electromotive force is reduced, thereby blocking a normal electricity generation.

Currently, many technologies are being developed for suitable sealing methods and sealants that may satisfy both long-term sealing performance and material reliability of the planar design SOFC. However, technology development for putting to practical use and commercializing the SOFC has not been made.

In this regard, a sealing glass compositions used for SOFCs operating at 800 °C to 1000 °C are widely known.

However, there is a problem in that, as the sealant used for the SOFC operating at 800 °C to 1000°C is heat-treated at a minimum of 850°C or higher, it is difficult to be used for a medium-low-temperature SOFC. Accordingly, there is a need for development of the sealant useful for the medium-low-temperature SOFC and having excellent sealing adhesion strength even after prolonged use.

In addition, others sealants each include a certain amount of glass-fluidity improving component, but do not have a suitable component and a composition ratio to match a coefficient of thermal expansion with that of a base material, so crack occurs during long operation of the SOFC.

In addition, in contrast to other sealants, there is a need for development of a sealing glass composition that is heat-treated at 800°C or less and having excellent chemical durability and heat-resistance under SOFC operating conditions of 700 ± 50°C.

### [Disclosure]

### [Technical Problem]

The present disclosure provides a new sealing glass composition suitable for use in a solid oxide fuel cell operating at a medium-low-temperature of 700±50°C and having excellent sealing adhesion strength even after prolonged use.

The present disclosure also provides a new sealing glass composition improving high-temperature fluidity of glass and having excellent durability without causing peeling or breakage by matching a coefficient of thermal expansion with that of a base material.

The present disclosure further provides a new sealing glass composition that is heat-treated at 800°C or less and having excellence in chemical durability and heat-resistance under SOFC operating conditions of 700 ± 50°C.

### [Technical Solution]

In order to provide a sealing glass composition suitable for use in a solid oxide fuel cell operating at a medium-low-temperature and having excellent sealing adhesion strength even after prolonged use, a sealing glass composition according to the present disclosure includes 10 to 45% by weight of SiO₂, 0.1 to 20% by weight of B₂O₃, 40 to 65% by weight of BaO, 0.1 to 20% by weight of CaO, 0.1 to 15% by weight of at least one of SrO, Al₂O₃, or ZrO₂.

In addition, in order to provide a new sealing glass composition improving high-temperature fluidity of glass and not causing peeling or breakage by matching a coefficient of thermal expansion with that of a base material, for the sealing glass composition according to the present disclosure, a content of SiO₂ may be controlled to be 1/4 or more and 3/4 or less of the content of BaO.

In addition, a content of at least one of SrO or ZrO₂ may be controlled to be equal to or less than 5% by weight to provide a new sealing glass composition that is heat-treated at 800°C or lower and having excellence in chemical durability and heat resistance under SOFC operating conditions of 700 ± 50°C.

### [Advantageous Effects]

A sealing glass composition according to the present disclosure has a new component system including at least one of SiO₂, B₂O₃, BaO, CaO, SrO, Al₂O₃ or ZrO₂ in a specific composition ratio. Therefore, the sealing glass composition according to the present disclosure has an excellent effect of being suitable for operation at a medium-low-temperature and minimizing sealing adhesion strength deterioration even after prolonged use, in contrast to other sealant glass compositions.

In addition, the sealing glass composition according to the present disclosure may have an optimum ratio of SiO₂ and BaO, thereby improving high-temperature fluidity of glass and blocking peeling or breakage by matching a coefficient of thermal expansion with that of a base material.

Furthermore, the sealing glass composition according to the present disclosure is subjected to heat-treatment at 800°C or less and has excellence in chemical durability and heat-resistance under SOFC operating conditions of 700 ± 50°C by controlling a content of at least one of SrO or ZrO₂.

### [Description of Drawings]

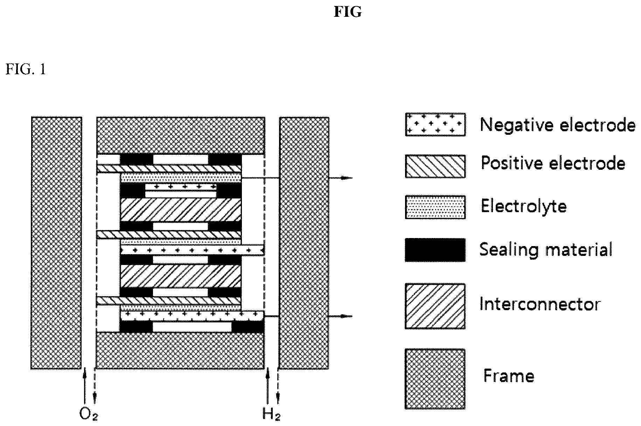

FIG. 1 is a schematic cross-sectional view showing a planar design solid oxide fuel cell.

### [Best Mode]

The above-mentioned objects, features, and advantages are described below in detail, and accordingly, a person having ordinary knowledge in the art to which the present disclosure pertains will easily embody the technical idea of the present disclosure. In describing the present disclosure, a detailed description of a well-known technology relating to the present disclosure may be omitted if it unnecessarily obscures the gist of the present disclosure. Hereinafter, preferred embodiments according to the present disclosure are described in detail.

Example embodiments may be embodied in different manners and should not be construed as limited to example embodiments set forth below. Rather, these example embodiments are provided so that this disclosure will be thorough and complete, and will fully convey the scope of example embodiments to those skilled in the art.

Hereinafter, a sealing glass composition and a solid oxide fuel cell using the same according to the present disclosure are described in detail.

### <Sealing glass composition>

There is a need for development of a sealing glass composition suitable for use in a medium-low-temperature solid oxide fuel cell operating under a temperature condition of about 700 ± 50°C. Accordingly, the present inventors have completed a novel sealing glass composition that is particularly suitable for a heat-treatment process (a sealing process) at 800 °C or lower and having excellent durability, and having excellent adhesion strength particularly at a bonding interface with a base material, even when the sealing glass composition is used for the medium-low-temperature solid oxide fuel cell for a long period of time.

The sealing glass composition according to the present disclosure includes 10 to 45% by weight of SiO₂, 0.1 to 20% by weight of B₂O₃, 40 to 65% by weight of BaO, 0.1 to 20% by weight of CaO, and 0.1 to 15% by weight of at least one of SrO, Al₂O₃, or ZrO₂.

SiO₂ is a component of improving a glass-forming ability and forming a glass network structure. The sealing glass composition according to the present disclosure includes SiO₂ in a range of 10 to 45% by weight. If the sealing glass composition according to the present disclosure includes SiO₂ in an amount of less than 10% by weight, glass crystallization easily occurs and sealing may not be easily performed. If the sealing glass composition according to the present disclosure includes SiO₂ in excess of 45% by weight, there is a problem in that, as fusion flow is rapidly increased at high temperatures, sufficient sealing between components is not performed.

B₂O₃ functions, together with SiO₂, as a glass former to enable sufficient vitrification and is a component of lowering a melting temperature, a softening temperature, and high-temperature viscosity of the glass, and reducing an amount of crystallization of a glass composition. The sealing glass composition according to the present disclosure includes 0.1 to 20% by weight of B₂O₃. If the sealing glass composition according to the present disclosure includes B₂O₃ in an amount of less than 0.1% by weight, a softening point is increased and viscosity at high temperature is increased, thereby degrading airtightness. In addition, if the sealing glass composition according to the present disclosure includes B₂O₃ in an amount exceeding 20% by weight, there is a problem in that water resistance of the sealant is degraded and a material may be deteriorated when a medium-low-temperature SOFC is operated for a long period of time.

BaO is a component capable of suppressing devitrification of glass and reducing high-temperature viscosity to improve fluidity. A sealing glass composition according to the present disclosure includes 40 to 65% by weight of BaO. If the sealing glass composition according to the present disclosure includes BaO in an amount of less than 40% by weight, there may be a problem in that glass fluidity is deteriorated. In addition, if the sealing glass composition according to the present disclosure includes BaO in an amount exceeding 65% by weight, a Ba component of the glass composition reacts with, particularly, a Cr component of a stainless steel base material (a connecting material) to form BaCrO₄, which significantly changes a coefficient of thermal expansion of the sealant. As a result, when the SOFC is operated for a long period of time, there is a problem in that cracks may occur in the base material and in the sealant.

CaO is a component capable of controlling a coefficient of thermal expansion of a sealing glass composition and improving durability of the sealant. The sealing glass composition according to the present disclosure includes 0.1 to 20% by weight of CaO. If the sealing glass composition according to the present disclosure includes CaO in an amount of less than 0.1% by weight, there may be a problem in that the required coefficient of thermal expansion may not be obtained and the glass fluidity may be deteriorated. In addition, if the sealing glass composition according to the present disclosure includes CaO in an amount exceeding 15% by weight, there is a problem in that devitrification of the glass may occur and high-temperature fluidity may be reduced.

At least one of SrO, Al₂O₃, or ZrO₂ corresponds to a component that improves the chemical durability and heat resistance of the sealant. The sealing glass composition according to the present invention includes 0.1 to 15% by weight of the at least one of SrO, Al₂O₃, or ZrO₂. If the at least one of SrO, Al₂O₃, or ZrO₂ is included in an amount of less than 0.1% by weight, an effect of improving the chemical durability and the heat resistance may be insignificant, and if the at least one of SrO, Al₂O₃, or ZrO₂ is included in excess of 15% by weight, there is a problem in that glass devitrification may occur. Preferably, at least one of SrO or ZrO₂ may be controlled to 5% by weight or less. If the at least one of SrO or ZrO₂ exceeds 5% by weight, the glass devitrification may occur during a quenching process of the sealing glass composition, and excessive glass crystallization may occur during the sealing process.

More preferably, for the sealing glass composition according to the present disclosure, the SiO₂ content may be adjusted to be 1/4 or more and 3/4 or less of the BaO content. As mentioned above, BaO component is a fluidity improving component, and in particular, preferably has a content that is greater than the content of SiO₂ to provide an appropriate fluidity to a component system of the sealing glass composition according to the present disclosure. If the content of SiO₂ is included in an amount less than 1/4 of the content of BaO, there is a problem in that the heat resistance of the glass is degraded and the fluidity becomes excessively increased. If the SiO₂ content exceeds 3/4 of the BaO content, there is a problem in that the glass fluidity is deteriorated and the sealing is not easily performed.

In addition, the sealing glass composition according to the present disclosure may preferably have a hemisphere temperature of 800 °C or less to be suitable for a heat treatment process (a sealing process) performed at 800 °C or less. The hemisphere temperature may be measured by a microscopic method using a high-temperature microscope and refers to a temperature at which cylindrical test samples are fused to each other to form a hemisphere mass. The sealing glass composition according to the present disclosure has the hemisphere temperature of 800 °C or less, thereby obtaining sufficient airtightness at a temperature of about 700 ± 50°C.

### <Solid oxide fuel cell and sealing method thereof>

The present disclosure provides a solid oxide fuel cell including a sealant formed of the above-mentioned sealing glass composition. More preferably, the solid oxide fuel cell may be a medium-low-temperature solid oxide fuel cell operating in a temperature range of 700 ± 50°C.

Referring to FIG. 1, a solid oxide fuel cell may include an anode, a cathode, an electrolyte provided between the anode and the cathode, an interconnector, and a frame, and the structure thereof is not particularly limited thereto.

The solid oxide fuel cell may be completely sealed to prevent gas mixing between the cathode and the anode and to electrically insulate edges of each of the electrodes, the electrolytes, and the interconnectors of each cell.

For the electric insulation, the sealant formed of the sealing glass composition according to the present disclosure may be used for sealing between each electrode and the interconnector, between the electrolyte and the interconnector, and between a cell stack and the frame.

In addition, the sealant formed of the sealing glass composition according to the present disclosure may be used for various parts thereof according to the structure of the solid oxide fuel cell.

A method for sealing a solid oxide fuel cell according to the present disclosure includes applying a sealing glass composition according to the present disclosure to a sealing portion and heat-treating at a temperature of 800 °C or less (sealing process).

Hereinafter, specific aspects of the present disclosure are described based on Embodiments.

### <Embodiments>

### <Preparation of sealing glass composition>

A sealing glass composition having a composition ratio shown in Table 1 below was prepared. Among components, BaCO₃, CaC03, and SrCO₃ were respectively used as raw materials of BaO, CaO, and SrO, and the same components as those shown in Table 1 below were used for the remaining components. The prepared glass composition was melted in an electric furnace in a temperature range of 1200 to 1350°C and then dry-quenched using a twin roll. A cullet obtained by quenching was pulverized with a dry grinder and then passed through a 230 mesh sieve to prepare a glass powder having a D₅₀ particle size of 15 to 25 *µ*m.

**[Table 1]**

| Component (% by weight) | Comparative Embodiment Example | | | | |
|---|---|---|---|---|---|
| | 1 | 2 | 3 | 1 | 2 |
| SiO₂ | 20.4 | 22.8 | 20.2 | 34.7 | 13.9 |
| B₂O₃ | 15.7 | 11.5 | 15.7 | 7.9 | 35.9 |
| Na₂O | 0 | 0 | 0 | 13.3 | 0 |
| BaO | 50.5 | 53.2 | 49.5 | 0.8 | 35.2 |
| CaO | 2.3 | 7.3 | 2.3 | 0 | 3.2 |
| Al₂O₃ | 0.8 | 4.7 | 1.2 | 2.2 | 5.9 |
| ZrO₂ | 0 | 0.5 | 0.8 | 0 | 0 |
| SrO | 0.3 | 0 | 0.3 | 0 | 5.9 |
| ZnO | 0 | 0 | 0 | 1.1 | 0 |

### <Experimental Example>

A coefficient of thermal expansion of each of sealing glass compositions prepared according to the above Embodiments and Comparative Examples was measured and a sample was prepared to examine reactivity with a base material (stainless steel). The results of measuring physical properties and reactivity are summarized in Table 2 below.

### 1. Measurement of coefficient of thermal expansion (CTE(x10⁻⁷/°C))

The powders prepared according to the Embodiments and the Comparative Examples were produced into pellets, the produced pellets were maintained at 750 °C, furnace-cooled, and then a coefficient of thermal expansion of the pellets was measured using a TMA instrument (TMA-Q400 TA instrument). The coefficient of thermal expansion was measured under two conditions for each sample as shown in Table 2.

**[Table 2]**

| | | Embodiment | | | Comparative Example | |
|---|---|---|---|---|---|---|
| | | 1 | 2 | 3 | 1 | 2 |
| Coefficient of Thermal Expansion | Measured after Maintaining at 780 °C for 10 hours | 107.9 | 105.2 | 106.9 | 92.2 | 60.5 |
| (CTE( × 10^{- 7}/°C)) | Measured after Maintaining at 780°C for 10 hours and Subsequently Maintaining at 670°C for 200 hours. | 103.8 | 108.1 | 104.7 | 91.3 | 61.1 |

As shown in the above Table 2, a coefficient of thermal expansion in each of Embodiments 1 to 3 of the present disclosure falls within a range of 103 to 114 (x10⁻⁷/°C). The bonded base material is stainless steel (SUS441) and has a coefficient of thermal expansion of about 115 (x10⁻⁷/°C). It can be seen that the coefficient of thermal expansion thereof in each of Embodiments 1 to 3 matches with a coefficient of thermal expansion of the bonded base material. However, it can be seen that it has a coefficient of thermal expansion of 92 or less (x10⁻⁷/°C) in Comparative Example, which does not match with the coefficient of thermal expansion of the bonded base material.

### 2. Adhesive strength evaluation

Next, the sealants prepared according to Embodiments 1 to 5 and the sealant prepared according to Comparative Example 1 were placed on the stainless steel (SUS441) and then heat-treated at 650 °C for 5 hours, and then adhesion strength properties thereof were observed. In Comparative Example 2, adhesion to the base material was impossible, and thus, adhesion strength properties thereof could not be observed.

The adhesive strength was observed by measuring shear tensile stress between the sealant and the base material. The shear tensile stress was measured by a method of fixing both ends of the sample to a measuring apparatus (a universal material tester) and pulling the stainless steel (SUS441) and the sealant to both sides to test the adhesion. The results of measuring the shear tensile stress in Embodiments 1 to 5 and Comparative Example 1 are shown in Table 3 below.

**[Table 3]**

| | Embodiment | | | Comparative Example | |
|---|---|---|---|---|---|
| | 1 | 2 | 3 | 1 | 2 |
| Shear Stress (kgf) before Heat Treatment | 101.2 | 100.8 | 101.3 | 84.4 | 77.8 |
| Shear Tensile Stress (kgf) after Heat Treatment at 650 °C for 5 hours | 95.1 | 94.5 | 95.2 | 79.7 | 65.4 |

As shown in Table 3, it can be seen that, even after the sealant according to Embodiments is heat-treated, thermal properties of the sealant is excellent, thereby minimizing a reduction in shear tensile stress. In contrast, it can be seen that, as the sealant according to comparative examples has degraded thermal properties, a shear tensile stress thereof is rapidly reduced after the heat treatment.

The present disclosure has been described as described above; however, the present disclosure is not limited to the embodiments disclosed herein, and various modifications can be made by those skilled in the art within the scope of the technical idea of the present disclosure. Further, even if working effects obtained based on configurations of the present disclosure are not explicitly described in the description of embodiments of the present disclosure, effects predictable based on the corresponding configuration have to be recognized.

## Claims

1. A sealing glass composition, comprising:
10 to 45% by weight of SiO₂,
0.1 to 20% by weight of B₂O₃,
40 to 65% by weight of BaO,
0.1 to 20% by weight of CaO, and
0.1 to 15% by weight of at least one of SrO, Al₂O₃, or ZrO₂.

2. The sealing glass composition of claim 1, wherein a content of the SiO₂ is 1/4 or more and 3/4 or less than a content of the BaO.

3. The sealing glass composition of claim 1, wherein at least one of the SrO or the ZrO₂ is 5% by weight or less.

4. The sealing glass composition of claim 1, wherein a hemisphere temperature is 800°C or less.

5. A solid oxide fuel cell, comprising a sealant formed of the sealing glass composition according to any one of claims 1 to 4.

6. A method for sealing a solid oxide fuel cell, comprising heat-treating the sealing glass composition according to any one of claims 1 to 4 at 800 °C or less.
